# EUROPÄISCHE PATENTSCHRIFT

(11) **EP 3 157 325 B1**
(45) Veröffentlichungstag und Bekanntmachung des Hinweises auf die Patenterteilung: **04.10.2017**
(21) Anmeldenummer: 15730153.2
(22) Anmeldetag: 18.06.2015
(51) Int. Cl.: A01K 1/015, D04B 21/12

(54) **VERFAHREN ZUR AUFSTALLUNG VON MILCHRINDERN UND BODENBELAG FÜR LIEGEBEREICHE ZUR AUFSTALLUNG VON MILCHRINDERN**
METHOD FOR THE STABLING OF DAIRY CATTLE, AND FLOOR COVER FOR BEDDING-DOWN AREAS FOR THE STABLING OF DAIRY CATTLE
PROCÉDÉ DE STABULATION DE BOVINS LAITIERS ET REVÊTEMENT DE SOL POUR DES ZONES DE COUCHAGE POUR LA STABULATION DE BOVINS LAITIERS

(30) Priorität: 19.06.2014 DE 102014211802
(43) Veröffentlichungstag der Anmeldung: 26.04.2017
(73) Patentinhaber: Hochschule für Technik und Wirtschaft Dresden, 01069 Dresden (DE)
(72) Erfinder: GEIDEL, Steffi, 01723 Wilsdruff (DE); HEIDIG, Katrin, 01279 Dresden (DE)
(74) Vertreter: Kailuweit & Uhlemann Patentanwälte Partnerschaft mbB
(86) Internationale Anmeldenummer: PCT/EP2015/063725
(87) Internationale Veröffentlichungsnummer: WO 2015/193443

(56) Entgegenhaltungen:
- DE-A1-102011 009 589
- DE-U- 7 531 642
- BERGER S. ET AL: "Textile mattress for dairy cows (DairyTex)", AACHEN-DRESDEN INTERNATIONAL TEXTILE CONFERENCE; PROCEEDINGS OF THE 4TH AACHEN-DRESDEN INTERNATIONAL TEXTILE CONFERENCE (AACHEN-DRESDEN INTERNATIONAL TEXTILE CONFERENCE FIBRES - MEMBRANES - TEXTILES: KEY TECHNOLOGIES FOR HIGH-TECH APPLICATIONS AND PR, Bd. 4th, 25. November 2010 (2010-11-25), Seiten 1-2, XP008177222, Dresden (D) ISSN: 1867-6405
- Hochschule für Technik und Wirtschaft Dresden: "Forschungsbericht 2011", , 1. August 2012 (2012-08-01), XP002743308, Gefunden im Internet: URL:https://www.htw-dresden.de/fileadmin/u serfiles/htw/docs/Forschung/HTWD-FoBe_2011 .pdf [gefunden am 2015-08-13]

## Beschreibung

Die Erfindung betrifft ein Verfahren zur Aufstallung von Milchrindern und einen Bodenbelag für Liegebereiche für Milchrinder sowie den Liegebereich.

### STAND DER TECHNIK

### Gestaltung von Liegebereichen

Beim Bau von Milchviehställen werden derzeit hauptsächlich zwei Arten der Liegeplatzgestaltung präferiert: die Tiefliegebox mit Einstreu und die mit Kunststoffmatte ausgestattete Hochliegebox. Während die Vorteile der Tiefliegebox vor allem in geringeren Baukosten und, bei guter Bewirtschaftung, hohem Tierkomfort sowie besserer Gliedmaßengesundheit zu suchen sind, besticht die Hochliegebox durch ein geringeres hygienisches Risiko, geringen Einstreubedarf und dadurch meist auch arbeitswirtschaftliche Vorteile. Vor dem Hintergrund des knapper und teurer werdenden Angebotes an Einstreumaterial und einer erntebedingten Qualitätsschwankung des Einstreumaterials sowie des erhöhten arbeitstechnischen Aufwands, wie etwa Reinigung der Gülle von Einstreumaterial, etc. sind zunehmend Hochliegeboxen mit Bodenbelägen von hohem Interesse.

Die in Hochliegeboxsystemen eingesetzten kommerziell erhältlichen Bodenbeläge weisen jedoch auch Nachteile auf.

So weisen Tiere in Haltungssystemen mit Hochliegeboxen eine erhöhte Prävalenz für Integumentschäden auf (z.B. Zähner, Schmidtko, Schrade, Schaeren, Otten (2009): Alternative Einstreumaterialien in Liegeboxen, Bautagung Raumberg-Gumpenstein, 33-38; Willen (2004) Tierbezogene Indikatoren zur Beurteilung der Tiergerechtheit in der Milchviehhaltung - methodische Untersuchungen und Beziehungen zum Haltungssystem, Diss. TiHo Hannover). Besonders betroffen sind die Tarsalgelenke. Erzeugt werden diese Schädigungen durch ein Zusammenwirken von Reibung, was als Radiergummieffekt bezeichnet wird und besonders bei Liegemattenoberflächen aus Gummi auftritt, und erhöhter Druckbelastung durch harte Liegebereiche. Geeignete Minimaleinstreu kann zu einer deutlichen Senkung der Schadenshäufigkeit und -schwere führen, verursacht jedoch zusätzliche Arbeits- und Materialkosten.

Hierzu wurden bisher verschiedene Vorschläge zur Minderung der auftretenden Integumentschäden gemacht, vgl. BERGER S. ET AL: "Textile mattress for dairy cows (DairyTex)",AACHEN-DRESDEN INTERNATIONAL TEXTILE CONFERENCE; PROCEEDINGS OF THE 4TH AACHEN-DRESDEN INTERNATIONAL TEXTILE CONFERENCE (AACHEN-DRESDEN INTERNATIONAL TEXTILE CONFERENCE FIBRES - MEMBRANES - TEXTILES: KEY TECHNOLOGIES FOR HIGH-TECH APPLICATIONS AND PR, Bd. 4th, 25. November 2010 (2010-11-25), Seiten 1-2, Dresden (D) So offenbart die DE 102 19 459 A1 eine Verbundmatte aus zwei miteinander verbundenen, insbesondere verschweißten, verklebten oder dergleichen zusammengefügten Schichten, nämlich einer Unterschicht aus einem elastischen Kunststoffmaterial, und einer Oberschicht aus einem Gewebematerial. Die Unterschicht ist dabei eine geschlossene, wasserundurchlässige Polypropylenfolie mit einer Stärke von 0,5 mm bis 1,5 mm, vorzugsweise 1,0 mm. Die Oberschicht besteht aus einem Polypropylen- oder Polyethylen-Flechtgewebe mit einer Stärke von 1,5 mm bis 1,9 mm, vorzugsweise 1,7 mm. Das Flechtgewebe stellt ein Bändchengewebe dar, wobei der Garntyp der Gewebefasern Spleißgarn ist. Die Gewebeart des Flechtgewebes der Oberschicht stellt eine Diagonalwebbindung in geflochtener Ausführung dar. Zudem sind die Gewebefasern des Flechtgewebes der Oberschicht gedreht.

Daneben ist auch der Einsatz von Ethylenvinylacetat (EVA) bzw. Polyethylen-Vinylacetat (PEVA) als Deckschicht bekannt.

Nachteilig ist an diesen Gewebedeckschichten und EVA-Folien, dass diese einer Beanspruchung durch seitliche Scherkräfte, welche durch den Abliegevorgang entstehen, nicht gewachsen sind und reißen. Daher hat sich derzeit die Verwendung von Minimaleinstreu als bisher alleinige Lösung durchgesetzt, um Integumentschäden auf gummierten Oberflächen zu vermeiden.

Weiterhin weisen Beläge für Hochliegeboxen zumeist eine wasserundurchlässige Oberfläche auf, die bewirkt, dass sich Flüssigkeit in Unebenheiten sammeln kann. Die ausgeprägteste Kuhlenbildung tritt in dem Bereich der Liegematte auf, auf dem sich das Euter der liegenden Kuh befindet. Die Folge ist ein erhöhtes Infektionsrisiko in der Zwischenmelkzeit. Auch dieser Problematik kann durch das Einbringen bakteriostatisch oder bakterizid wirkender Einstreu entgegengewirkt werden, allerdings sind damit wiederum Arbeits- und Materialkosten verbunden.

Hierzu wurden verschiedene Lösungsansätze bisher verfolgt.

So offenbart die DE 102 19 459 A1, wie oben ausgeführt, eine saugfähige Gewebedeckschicht auf wasserdichter Untermatte. Nachteilig bei der vorgestellten Variante ist, dass größere Feuchtigkeitsmengen nicht aufgesogen werden und sich bei verschleißbedingter Kuhlenbildung der Untermatte Pfützen auf dem Liegebereich bilden. Zudem weisen saugfähige Gewebe ein schlechtes Trocknungsverhalten auf. Auch hierfür ist eine Minimaleinstreu zur Trockenhaltung möglich.

Daneben ist aus der DE 29820488 der Einsatz einer Gewebedeckschicht auf Untermatte aus granulatgefüllten Gummischläuchen bekannt, wobei die Feuchtigkeit durch das Gewebe hindurch in die Schlauchzwischenräume abgeleitet werden soll. Nachteilig an dieser Lösung ist, dass die Gummischläuche bei Benutzung dauerhaft verformt werden bis sie eine geschlossene Fläche bilden, wodurch eine Pfützenbildung wie bei geschlossener Untermatte entsteht. Daher ist auch bei dieser Variante eine Trockenhaltung nur über Minimaleinstreu möglich.

Weiterhin offenbart die EP 0651 604 A1 eine perforierte Gummimatte für Pferde, wobei jedoch nur wenige Perforierungen pro Fläche vorhanden sind, sodass im Ergebnis nur ein sehr geringer Anteil des Liegebereichs diffusionsoffen ist. Eine demnach gewünschte Ableitung der Flüssigkeit ist mit der offenbarten Variante nicht möglich, sodass eine Trockenhaltung nur über Minimaleinstreu möglich erscheint.

Schließlich ist aus der EP 0813 809 A1 der Einsatz von Polsterungen aus Fasermaterial mit diffusionsoffenem Hüllmaterial (Gewebe und Strickware) bekannt. Dabei durchdringt jedoch die Feuchtigkeit das komplette Polstermaterial und führt zur Verrottung der Füllfasern, weshalb eine Verwendung derart gestalteter Matten hygienisch nicht beherrschbar ist und zudem keine ausreichende Nutzungsdauer bietet.

Weiterhin sind die meisten bisher verwendeten, ausreichend haltbaren Liegematten aus Kunststoff verhältnismäßig hart. Messungen des Auflagedruckes, den eine liegende Kuh auf ihren Liegebereich ausübt, ergaben, dass der Liegebereich bereits bei Drücken <1N/cm² nachgeben muss, wenn sich der Liegebereich dem Kuhkörper ausreichend anpassen soll. Eine Auswertung der von der DLG veröffentlichten Testberichte für Liegeboxenbeläge für Rinder (Stand 2010) ergab, dass lediglich zwei der geprüften Matten bereits bei <1N/cm² mit einer Formänderung reagieren.

Hierzu wurden zur Erhöhung der Nachgiebigkeit von Liegematten alternative Polstermaterialien vorgeschlagen.

So offenbart die DE 2 610 954 A1 eine Matte aus einem nachgiebigen Material mit geringer Wärmeleitfähigkeit, wie Polyurethan oder ein ähnliche Eigenschaften aufweisender Werkstoff, wobei die Materialstärke mindestens 2 mm beträgt. Vorzugsweise ist das Material ein Polyurethan-Halbhart-Schaumstoff mit einer geschlossenen Oberfläche.

Die DE 2 648 193 A1 beschreibt eine Matte für einen Stallbodenbelag, die die Standfläche eines Tieres einstückig überdeckt, bestehend aus einer die Mattenoberfläche bildenden Tragschicht mit hoher Verschleißfestigkeit und mittlerer Shorehärte und mindestens einer unter der Tragschicht angeordneten Polsterschicht aus synthetischem Schaumstoff mit sehr geringer Shorehärte und geringerer Verschleißfestigkeit, wobei eine Verbindung zwischen der Tragschicht und der Polsterschicht leicht lösbar so ausgebildet ist, sodass die Polsterschicht zu jedem späteren Zeitpunkt von der Tragschicht gelöst werden kann, ohne Rückstände zu hinterlassen.

Nachteilig ist jedoch eine starke Wasserbindung in Schaumstoffen und Fasern verbunden mit einem schlechten Trocknungsverhalten, weshalb diese Schaummatten und Fasern z.T. anfällig gegenüber Fäulnisprozessen und Schimmelbildung sind. Diesem Effekt kann durch eine feuchtigkeitsundurchlässige Hülle (Gummi, EVA, etc.) entgegengewirkt werden, wodurch die Liegemattenoberfläche jedoch nicht mehr diffusionsoffen ist und z.T. der oben beschriebene Radiergummieffekt entstehen kann.

Weiterhin sind Granulatfüllungen bekannt.

So offenbart beispielsweise die DE 2 529 832 A1 eine dreischichtige Liegematte oder Platte, insbesondere für die strohlose Aufstallung von Nutztieren. Diese Liegematte oder Platte besteht dabei aus zwei je 0,5 bis 8 mm dicken, als Hülle wirkenden Außenschichten aus Kautschuk, kautschukelastifizierten Polyvinylchlorid oder einem ähnlichen Material und einer 5 bis 100 mm dicken Mittelschicht aus elastisch stark verformbaren Teilchen aus z.B. Polyurethan-Schaum, Polyvinylchlorid-Schaum, Kautschukschnitzeln oder gleichwertigem Material.

Schaumstoffe und Granulate in Liege- oder Bodenmatten für Nutztiere neigen jedoch zu irreversiblen Verformungen, sodass eine Kuhlen- und Pfützenbildung auftritt. Zudem ist eine schnell nachlassende Polsterwirkung und damit verbunden eine geringe Nutzungsdauer der Matten feststellbar.

Weiterhin sind Matten mit fluider Füllung oder Wasserbetten für Nutztiere bekannt.

So offenbart die WO 00/33645 A1 eine flüssigkeitsgefüllte Matte für Schweine, wobei die Matte in mehrere Kompartimente unterteilt ist, welche jeweils mit einer Flüssigkeit wie Wasser gefüllt sind. Die einzelnen Kompartimente können über eine Heizeinrichtung temperiert werden.

Daneben sind auch Wasserbetten für Kühe bekannt. So ist von der Fa. Dunlop-ENERKA GmbH das Wasserbett Dunlop Alanta bekannt, welches für den Einsatz in Hochliegeboxen geeignet ist. Problematisch hierbei sind jedoch ein möglicher Ausfall bei Frost sowie eine aufwändige und komplizierte Verlegetätigkeit. Weiterhin sind Fluid-Füllungen und Wasserbetten unter den Bedingungen der Rinderhaltung anfällig gegenüber Leckagen, was zu einer geringen Nutzungsdauer bzw. dem Wegfall der Polsterwirkung führt.

Auch bekannt sind textile Liegematten für Kühe. So offenbart die JP 08149935 A eine textile luft- und feuchtigkeitspermeable Liegematte mit einem Abstandsgewirke aus Multifilamentgarnen und Monofilen, wobei die Innenschicht durch Monofile gebildet wird.

Im Ergebnis hat sich keiner der vorbeschriebenen Ansätze in der Praxis umfassend bewährt.

### Reinigungsverfahren

Für eine effiziente Bewirtschaftung von Rinderställen ist neben dem Liegekomfort auch die mit den eingesetzten Matten verbundene Reinigung des Liegebereichs von erheblicher Bedeutung. Die Notwendigkeit zeitintensiver Reinigungsverfahren hat bisher den erfolgreichen Einsatz von textilen Liegematten gegenüber Gummimatten verhindert. Hierbei spielt auch die für die Reinigung der Matten einzusetzende Technik eine maßgebliche Rolle bei der Entscheidung für die verwendeten Matten. Anzustreben sind hierbei vor allem automatische Reinigungssysteme, die den personellen Aufwand zur Reinigung minimieren.

Bekannt sind hierfür etwa automatische Reinigungssysteme für Stalleinrichtungen. So offenbart die DE 20 2008 013 760 U1 eine Hochdruckreinigungsvorrichtung zur Reinigung von Wandflächen und/oder Bodenflächen in Stallungen zur Tierhaltung, wobei die Vorrichtung aus einem verfahrbaren, eine Abschirmung bildendes Gestell besteht, welches an einen Hochdruckreiniger anschliessbar ist und in dem Gestell wenigstes ein vertikal sowie wenigstens ein horizontal verlaufendes Düsenrohr und angeordnet ist, wobei über die Erstreckung des einzelnen Rohres mehrere Hochdruckdüsen quer zur Rohrestreckung angeordnet sind zur Erzeugung einer Hochdruckstrahlfläche.

Die DE 69932455 T2 offenbart eine automatische Reinigungsvorrichtung für Tierställe, mit einem Chassis mit zwei Paaren von Rädern, von denen zumindest eines mittels einer damit verbundenen Antreibvorrichtung antreibbar ist, einem Düsenteil zum Spritzen eines Reinigungsfluids, sowie einen Reinigungsarm, der durch ein Gelenk beweglich am Chassis angebracht ist, wobei der Düsenteil beweglich mit dem äußeren Ende des Reinigungsarms verbunden ist.

Die im Stand der Technik bekannten automatischen Reinigungssysteme für Tierställe sind jedoch ungeeignet für textile Beläge. Auch wenn diese flüssigkeitsdurchlässig ausgebildet sind, ist der Einsatz flüssigkeitsbasierter Reinigungssysteme vor dem Problem der abzuleitenden Feuchtigkeit nicht empfehlenswert.

### Klimatisierung des Liegebereichs

Für den Tierkomfort ist neben dem zu wählenden Bodenbelag auch die Belüftung des Liegebereichs von besonderer Bedeutung. Insbesondere in den Sommermonaten ist eine verstärkte Belüftung notwendig, um Hitzestauungen im Stallbereich zu vermeiden. Jedoch sind die bekannten Deckenbelüftungsanlagen nur unzureichend geeignet eine effiziente Belüftung, insbesondere für Tiere während des Liegens, zu gewährleisten.

Durch mangelnde Klimatisierung kann es zu Hitzestress bei den Tieren kommen, welcher bei Kühen die nachfolgenden Symptome auslöst:
- Erhöhte Atemfrequenz, bis zu 80 Atemzüge je Minute (Pumpen)
- Reduzierung der Futteraufnahme
- Erhöhung der Wasseraufnahme
- Erhöhung der Körpertemperatur auf 39 bis 40 °C

Die Auswirkungen von Hitzestress können demnach sein:
- Abfall der Milchleistung bis zu 4 kg/d
- Geringere Östrusraten, erhöhter embryonaler Frühtod
- bei Auftreten von Hitzestress in den letzten 3 Trächtigkeitsmonaten:
   - geringere Geburtsgewichte der Kälber
   - Stoffwechselprobleme nach der Abkalbung
   - Milchleistungseinbußen bis zu 12 % in der Folgelaktation

Durch mangelnde Klimatisierung ist daher ein wirtschaftlicher Verlust aufgrund verringerter Milchproduktion gegeben. Gegenwärtige Belüftungskonzepte umfassen dabei Trauf-First-Systeme, Quer- und Tunnellüftung sowie Umluftsysteme und einzelne Ventilatoren.

Insgesamt ist für eine effiziente Bewirtschaftung von Milchviehställen und den Tierkomfort ein Zusammenspiel der Aspekte Liegekomfort und Stallbelüftung sowie eine effiziente Reinigung des Bodenbelags entscheidend.

### PROBLEMSTELLUNG

Es wäre daher in hohem Maße wünschenswert, ein Verfahren zur Aufstallung von Milchrindern bereitzustellen, welches im Liegebereich einstreulos betrieben wird, eine schnelle Ableitung von Feuchtigkeit gewährleistet und keine Integumentschäden am Tier verursacht. Zudem wäre es wünschenswert, im Liegebereich eine Klimatisierung der Milchkühe während des Liegens und eine effiziente Reinigung des Liegebereichs zu ermöglichen.

### AUFGABE

Die Aufgabe der vorliegenden Erfindung besteht daher darin, die vorbenannten Nachteile des Stands der Technik zu überwinden.

Die Aufgabe wird durch die unabhängigen Ansprüche gelöst. Vorteilhafte Ausgestaltungen sind in den abhängigen Ansprüchen angegeben.

### BESCHREIBUNG DER ERFINDUNG

Ein erster Aspekt der Erfindung betrifft daher ein Verfahren zur Aufstallung von Milchrindern in Milchrinderställen umfassend:
- Bereitstellen eines einstreufreien Liegebereichs mit einem Bodenbelag, wobei der Bodenbelag zwei- oder mehrlagig ausgeführt ist, wobei zumindest die obere Einzellage aus einer 3D-Abstandstextilie aus Kunststoff, bevorzugt aus einem 3D-Gewirke ausgebildet ist und die Einzellage Öffnungen in Form von Poren oder Maschen aufweist, die einen Poren- bzw. Netzmaschendurchmesser von 0,2 bis 0,8 cm, bevorzugt 0,3 bis 0,7 cm, besonders bevorzugt von 0,5 cm aufweisen,
- Kontaktieren des Liegebereichs durch Milchrinder, bevorzugt ein Liegen der Milchrinder auf dem Liegebereich, wobei die während der Kontaktierung anfallende Flüssigkeiten durch die Poren oder Maschen des Bodenbelags des Liegebereichs hindurch abgeleitet werden, wobei keine Flüssigkeitsansammlungen auf dem Liegebereich verbleiben, sodass auf den Einsatz von Einstreu verzichtet wird und
- eine Unterlüftung des Bodenbelags zur Klimatisierung der Milchrinder beim Liegen erfolgt.

Unter einstreulos wird im vorliegenden Sinne ein Verzicht auf organische oder anorganische Einstreumaterialien (z.B. Stroh, Kalk, Sand, Kieselgur, etc.) verstanden.

Überaschenderweise wurde festgestellt, dass entgegen der Erwartungen durch die erfindungsgemäße Struktur der Einzellagen des Bodenbelags, welche beispielsweise wie eine Bienenwabe mit ca. 0,5 cm großen Öffnungen aussehen, der grober Schmutz (Kuhkot) nicht wie erwartet die Öffnungen passiert. Die im Kot vorhandenen Pflanzenfasern bleiben auf der Oberfläche des Bodenbelags liegen und wirken wie ein Sieb, durch dass dann nur die Feuchtigkeit nach unten in die Matte eindringt. Die sehr großen Öffnungen in Form von Poren oder Maschen mit einem Poren- bzw. Netzmaschendurchmesser von 0,2 bis 0,8 cm im Bodenbelag verhindern aber, dass sich die Pflanzenfasern des Kotes fest in der Matte verankern und als "Auflagefläche" für Schmutz dienen, der dann eine feste Kruste ausbilden würde. Dadurch verbleibt der grobe Schmutz auf dem Bodenbelag während Feuchtigkeit diesen passiert, wobei der grobe Schmutz als lockere Ablagerung auf dem Bodenbelag verbleibt und von diesem entfernt werden kann.

Aufgrund der Ausgestaltung des Bodenbelags passiert die Flüssigkeit die Öffnungen, sodass auf den herkömmlichen Einsatz von Einstreu verzichtet werden kann, da keine Flüssigkeit auf dem Bodenbelag verbleibt. Der feuchtigkeitsdurchlässige Bodenbelag verhindert Pfützenbildung und lässt aufliegenden Schmutz sehr schnell trocknen. Infolgedessen kommt es zu einer geringeren Verschmutzung der Tiere und einem geringeren Keimwachstum. Auch ist eine schnellere Abtrocknung der Klauen und eine damit einhergehende verbesserte Klauengesundheit zu erwarten.

Ein weiterer wesentlicher Vorteil ist die Möglichkeit der Klimatisierung der Milchrinder durch eine Unterlüftung. Dies steigert den Tierkomfort im Liegebereich erheblich und ist dabei wesentlich effizienter als herkömmliche Stallbelüftungsanlagen, die im Liegebereich der Tiere keine hinreichende Belüftung gewährleisten. Durch die Verwendung des erfindungsgemäßen Bodenbelags im erfindungsgemäßen Verfahren, welcher einstreufrei genutzt werden kann, ist zum einen die Ableitung von Feuchtigkeit und zum anderen eine Unterlüftung gewährleistet.

Bevorzugt erfolgt die Unterlüftung durch den erfindungsgemäßen Bodenbelag hindurch mittels einer Vorrichtung zur Belüftung, die beispielsweise regelbar ausgebildet ist. Dabei erfolgt die Zuführung der Luft zu dem Liegebereich mit dem erfindungsgemäßen Bodenbelag bevorzugt mittels eines Unterflurkanals, sodass die Luft unterhalb des Bodenbelags zugeführt werden kann und nachfolgend durch den erfindungsgemäßen Bodenbelag hindurch geleitet wird. Dabei weist der Unterbau des Stallgebäudes zumindest im Bereich des Bodenbelags Öffnungen auf, die ein Passieren der Luft gewährleisten. In einer Ausgestaltung kann der Unterbau als Spaltenboden ausgeführt sein.

In einer Ausführungsform der Erfindung umfasst das Verfahren weiterhin die Reinigung des erfindungsgemäßen Bodenbelags, wobei die Reinigung bevorzugt durch Unterdruck erfolgt. Dabei wird beispielsweise eine Vorrichtung zur Reinigung des Bodenbelags verwendet, wobei die Vorrichtung zur Reinigung des erfindungsgemäßen Bodenbelags mittels Unterdruck ausgebildet ist. Durch den Unterdruck wird eine Ansaugung erzeugt, wobei die Vorrichtung dabei die auf dem erfindungsgemäßen Bodenbelag verbleibenden Verunreinigungen aufsaugt.

In einer weiteren Ausführungsform der Erfindung erfolgt die Reinigung automatisiert. Dabei erfolgt die Reinigung durch eine Vorrichtung zur Reinigung des Bodenbelags derart, dass diese eine festgelegte Fläche automatisch reinigt. Durch die automatisierte Reinigung ist eine verbesserte Bewirtschaftung der Liegebereiche möglich, was zu einer erhebliche Ersparnis an personellem Zeitaufwand führt.

In einer Ausführungsform der Erfindung weist die Vorrichtung zur Reinigung einen omnidirektionalen Antrieb auf. Dadurch kann die Vorrichtung zur Reinigung die Bewegungsrichtung beliebig ändern. Dies kann beispielsweise über Sensoren gesteuert werden, welche als Umgebungssensoren an der Vorrichtung zur Reinigung angeordnet sind und somit mögliche Hindernisse detektieren können, wodurch eine Richtungsänderung erfolgt.

Ein weiterer Aspekt der Erfindung betrifft einen Bodenbelag für Liegebereiche zur Aufstallung von Milchrindern in Milchrinderställen. Der erfindungsgemäße Bodenbelag für Liegebereiche zur Aufstallung von Milchrindern in Milchrinderställen ist dadurch gekennzeichnet, dass dieser zwei- bzw. mehrlagig ausgeführt ist, wobei zumindest die obere Einzellage aus einer 3D-Abstandstextilie ausgebildet ist, wobei die Einzellage grobporige Öffnungen aufweist und dadurch für Feuchtigkeit offen, aber für Feststoffpartikel geschlossen ist. Die erfindungsgemäßen 3D-Abstandstextilien besitzen eine offene Struktur, welche derart ausgebildet ist, dass diese eine Unterlüftung sowie einen Luft- und Feuchteaustausch zulässt und dadurch die Bildung von Feuchtigkeitsfilmen an der aufliegenden Haut der Tiere verhindert. Durch die horizontale Beweglichkeit der textilen Strukturen wird ein Aufscheuern aufliegender Körperpartien verhindert. Beide genannten Eigenschaften bewirken, dass Integumentschäden, wie sie bei herkömmlichen Liegematten mit Gummioberfläche vor allem an den Gelenken der Tiere auftreten, vermieden werden. Durch die 3D-Struktur kann eindringende Feuchtigkeit sowohl horizontal entlang der Fasern der Deckschicht als auch vertikal in die unteren Gewirkebereiche abgeleitet werden, ohne dass das Fadenmaterial selbst Feuchte aufnimmt.

Erfindungsgemäß ist die Einzellage als gitterartig oder netzartig offenes 3D-Gewirke ausgebildet, wobei die Einzellage einen Poren- bzw. Netzmaschendurchmesser von 0,2 bis 0,8 cm, bevorzugt 0,3 bis 0,7 cm, besonders bevorzugt von 0,5 cm aufweist.

In einer Ausführungsform der Erfindung weist der Bodenbelag 2 bis 12, bevorzugt 5 bis 10, besonders bevorzugt 8 Einzellagen auf.

In einer Ausführungsform der Erfindung ist das Fadenmaterial für die Einzellage ein Polyfilamentgarn, welches bevorzugt aus Polyester ausgebildet ist und einen Filamentdurchmesser von bis zu 0,5 mm, bevorzugt 0,2 mm aufweist.

Wesentlich ist hierbei der Einsatz eines alternativen Materials für die obere Schicht, welche aus 3D-Abstandstextilien aus Kunststofffilamenten gebildet wird. Dabei besteht die erfindungsgemäße 3D-Abtandtextilie aus einer Ober- und einer Unterschicht, welche durch Abstandsfäden miteinander verbunden sind.

In einer Ausführungsform der Erfindung sind die Strukturen der 3D-Abstandstextilie als Gewebe, Gestrick oder Gewirke ausgeführt. Bevorzugt sind die die Strukturen der 3D-Abstandstextilie als Gewirke ausgeführt.

Unter einem Gewirke werden textile Flächen verstanden, bei denen in Verarbeitungsrichtung zugeführte Kettfäden zu Schlaufen umgeformt und mittels Maschenbildung miteinander verbunden werden. Zusätzlich können in den Flächen Fäden in Quer-, Längs- und Diagonalrichtung angeordnet werden. Eine 3D-Gewirkesturktur besteht aus zwei Kettengewirken, die durch Polfäden miteinander verbunden sind. Die Polfäden werden als Kettfäden angeordnet und abwechselnd als Maschen in die beiden Kettengewirke eingebunden. Durch die Anordnung der Einbindestellen der Polfäden als Masche wird die Anordnung der Polfäden zwischen den Kettengewirken (senkrecht, schräg) bestimmt. Durch die Anzahl der Polkettfäden und die Anordnung der Anbindestellen wird die Anzahl der Polfäden/Fläche bestimmt.

In einer Ausführungsform der Erfindung sind die Ober- und Unterschicht der 3D-Abstandstextilie als Gewirke ausgeführt. Da beim Kettenwirkverfahren gegenüber den Stricken und Weben beim gegenwärtigen Stand der Technik im Pol biegesteife Fäden mit hoher Geschwindigkeit verarbeitet werden können, wird Vorzugsweise ein Kettengewirke eingesetzt.

In einer Ausführungsform der Erfindung ist die 3D-Abstandstextilie aus Monofilamet-, Multifilament- oder Mikrofilamentgarnfäden ausgebildet. Vorzugsweise ist die 3D-Abstandstextilie aus Multifilamentgarnfäden ausgebildet.

In einer Ausführungsform der Erfindung sind die Abstandsfäden als biegesteife Abstandsfäden, die die Ober- und Unterschicht verbinden, ausgebildet.

Diese Abstandsfäden sind bindungstechnisch, fest in der Ober- und Unterschicht angeordnet. Diese Fäden können senkrecht bzw. auch schräg zueinander (verkreuzt) angeordnet werden. Die Eigenschaften des Abstandsfadens (Filamentart, Filamentdurchmesser, die räumliche Anordnung, der Abstand zwischen Ober- und Unterschicht und die Anzahl der Abstandsfäden pro Fläche erzeugen die notwendige Druckstabilität. Der Bodenbelag soll so stabil sein, dass die Milchrinder beim Liegen möglichst gut gepolstert sind, aber die Abstandsstruktur nicht vollständig zusammengedrückt ist. Die Dicke des Bodenbelags sollte bei insgesamt ca. 60 mm liegen. Dies kann durch ein entsprechendes 3D-Abstandsgewebe, -gewirke erreicht werden. Zur Steigerung der Druckstabilität und der Langzeitbeständigkeit und zur Reduktion der Kosten ist die Anordnung mehrerer unterschiedlich ausgebildeter Lagen, zu denen auch bekannte Gummimatten gehören können, welche entsprechend perforiert sein müssen, sinnvoll.

Bei der Druckbeanspruchung verformen sich die Abstandsfäden zwischen der Ober- und Unterschicht der 3D-Abstandstextilie durch Biegung. In einer weiteren Ausführungsform der Erfindung werden in den Ober- und Unterschichten der 3D-Abstandstextilie vorzugsweise hochfeste Fäden, wie z.B. technische Polyamidgarne, Polyester oder Polyethylene eingesetzt.

In einer weiteren Ausführungsform der Erfindung werden zur Erzielung der notwendigen hohen Druckstabilität vor allem Monofile in den Schichten der 3D-Abstandstextilie eingesetzt (PE, PA, auch modifiziertes PA, wie PA 12, PP, siehe Wolfgang Bobeth, Textile Faserstoffe. Beschaffenheit und Eigenschaften, Springer, Berlin (April 1993), ISBN-13: 978-3540556978). Die Faserstoffe bewirken dabei die Erhöhung der Druckstabilität, weisen eine hohe Biegesteifigkeit auf, zeichnen sich durch eine hohe Elastizität und chemische Beständigkeit aus und besitzen dazu noch ein gutes Abreinigungsverhalten.

In einer weiteren Ausführungsform der Erfindung werden in der Schicht der Oberseite der 3D-Abstandstextilie Monofile mit mittlerem Durchmesser (0,1 bis 0,2 mm Durchmesser) verwendet. Diese haben den Vorteil einer geschlossenen Filamentoberfläche, wodurch keine Schmutzeinlagerung in die Fasern erfolgt. So können entsprechende Gewirkelagen etwa besonders für den Einsatz als Deckschicht des Bodenbelags geeignet sein.

In einer Ausführungsform der Erfindung wird die 3D-Abstandstextilie aus Multifilamentgarnen oder Polyfilamentgarnen ausgebildet. Solche Multifilamentgarne lassen sich dabei besonders gut verarbeiten, neigen jedoch zur Einlagerung von Schmutz in das Filament. Bevorzugt weisen deshalb die Multifilamentgarne eine oberflächenversiegelnde Beschichtung auf, beispielsweise eine Beschichtung mit Silikon oder Polyurethan.

In einer weiteren Ausführungsform der Erfindung wird die 3D-Abstandstextilie aus Mikrofilamentgarnen ausgebildet.

In einer Ausführungsform der Erfindung wird der Feuchtetransport durch die 3D-Abstandstextilie durch zusätzliche Anordnung von Multifilamentgarnen oder Mikrofilamentgarnen mit einem Einzelfilamentdurchmesser von maximal 5 µm, in den Deckschichten und in der Abstandsschicht verstärkt. Die die Abstandsschicht bildenden Fäden sind so angeordnet, dass bei Druckbelastung zwischen Ober- und Unterschicht ein Abstand erhalten bleibt und die Feuchtigkeit nicht zur Oberfläche zurück transportiert wird.

In einer weiteren Ausführungsform der Erfindung werden für den Transport der Feuchtigkeit durch die 3D-Abstandstextilie zusätzlich Funktionsgarne eingesetzt. Hier kommen vor allem PE- und PA-Mikrofilamentgarne in Betracht. Durch die geringen Filamentdurchmesser und die hohe Filamentanzahl im Garn entstehen hohe Kapillarkräfte, die die Feuchtigkeit sehr gut transportieren.

In einer weiteren Ausführungsform der Erfindung erfolgt die Einstellung der Drucksteifigkeit der 3D-Abstandstextilie, die vorzugsweise bereits bei ≤ 1 N/cm² eine Anpassung an den aufliegenden Körper gewährleisten und gleichzeitig auch bei 10 N/cm² noch keine irreversiblen Materialschäden aufweisen soll, über die Variation der Fadenmaterialien, der Fadendurchmesser, der Anzahl der Fäden/Fläche und der räumlichen Anordnung der Fäden, vorzugsweise senkrecht und schräg in Kombination, zwischen den Schichten. Die Abstandsgewirke können durch die Materialauswahl, die textile Struktur und die Geometrie den Anforderungen (Dicke, Stauchhärte) angepasst werden.

In einer weiteren Ausführungsform der Erfindung wirkt das Luftpolster in der 3D-Abstandstextilie als thermischer Isolator gegenüber dem Liegebereichsuntergrund. Dadurch wird eine Unterkühlung der Tiere insbesondere in den Wintermonaten vermieden.

In einer weiteren Ausführungsform der Erfindung ist das 3D-Abstandstextilie verschiedenartig chemisch ausgerüstet, so dass wasserableitende und bakterizide (z. B. Einsatz von mit Silber beschichteten Garnen) Eigenschaften erzeugt und dem jeweiligen Anwendungszweck entsprechend variiert werden können. Durch hydrophobe Oberflächen, Modifikation der Oberflächenstruktur mittels Garnauswahl und textile Struktur wird die Schmutzhaftung an der Oberfläche reduziert.

In einer Ausführungsform der Erfindung weisen die Filamentgarne der 3D-Abstandstextilien eine Ausrüstung auf, wobei die Ausrüstung zumindest eine wasserabweisende Komponente umfasst. Wasserabweidende Ausrüstungen sind dabei beispielsweise Fluorcarbonverbindungen (FC). Denkbar ist auch eine Ausrüstung mit einer verstärkenden Komponente (z.B. Polyurethan (PU), Silikon). Mögliche Varianten sind dabei etwa silikonmodifizierte PU-Beschichtungen, z.B. Silikopur 8080, Evonik Industries (40% Gew.), Tego Foamex 805, Evonik Industries, 0,5% Gew. und Wasser, 59,5 % Gew.. Das Imprägnierverfahren erfolgt bei einer Nassaufnahme von ca. 60% und anschließendem Trocknen bei 120°C, 2 min Kondensieren bei Trockenauflage ca. 10% 160°C, 1 min.

In einer Ausführungsform der Erfindung umfasst die Ausrüstung eine Kombinationsbeschichtungen aus einer PU-Basisschicht und einer FC-Deckschicht. Diese Kombinationsbeschichtung eignet sich insbesondere für Decklagen des erfindungsgemäßen Bodenbelags, welche den meisten Kontakt mit der Verschmutzung aufweisen und einer größeren Belastung beim Liegen der Tiere ausgesetzt sind.

In einer weiteren Ausführungsform der Erfindung umfasst das Fadenmaterial der 3D-Abstandstextilie eine bakterizid wirkende Ausrüstung, wie etwa Silberionen. Dies ist insbesondere vorteilhaft für die Ausrüstung der Decklage, welche aufgrund des direkten Kontakts mit dem Tier und Schmutz eine erhöhte Keimbelastung aufweist.

In einer Ausführungsform der Erfindung wird ein antibakterielles Fadenmaterial oder eine antibakterielle Beschichtung verwendet.

Diese kann zum Beispiel Cyclodextrine, Triclosan, Chitosan, Silber-Ionen, Silber-Partikel oder quaternäre Ammonium-Verbindungen umfassen.

In einer weiteren Ausführungsform der Erfindung erfolgt zur Entfernung von Schlichtemitteln, Schaffung von aktivierten Faseroberflächen, Erhöhung der Benetzungsfähigkeit sowie der Verbesserung des Adhäsionsvermögens eine nasschemische Vorbehandlung der textilen Abstandsgewirke mit Alkali, anionischen und nichtionischen Tensiden sowie Extraktionshilfsmitteln durch das klassische Vorbehandlungsverfahren.

In einer Ausführungsform der Erfindung weisen hydrophobe Fadenmaterialien oder Beschichtungen durch Einsatz von Fluorcarbonverbindungen (FC) neuester Generation eine wasser-, öl- und schmutzabweisende Ausrüstung auf. Die Wirkung wird durch stark verzweigenden Strukturen (Dendrimere) auf der Faseroberfläche aus FC Funktionschemikalien basierend auf 6 C-Atomen hervorgerufen. Durch das Aufweisen eines energiearmen Grenzschichtverhaltens mit signifikantem Abstoßungscharakter der FC Ausrüstung wird Selbstreinigungseffekt auf der Oberfläche der Liegematten generiert. Die Ausrüstung weist eine gute Chemikalien-, Wasch- und Reinigungsbeständigkeit auf.

In einer weiteren Ausführungsform der Erfindung besteht eine Möglichkeit zur Verbesserung der Abriebbeständigkeit von Oberflächenschichtsystemen in der Verwendung eines Abriebverbesserungsmittels basierend auf Fluorpolymer sowie Polyurethanpolymer mit den FC Funktionschemikalien. Die Abriebverbesserungsmittel weisen eine gute Verträglichkeit mit FC Funktionschemikalien auf.

In einer weiteren Ausführungsform der Erfindung verstärkt der Einsatz von Nanoadditiven z. B. Siliziumdioxid, Titaniumdioxid, Aluminiumoxid usw. mit FC Ausrüstungsmitteln die gewünschten Wirkungen hinsichtlich Abriebbeständigkeit der Beschichtung und Verbesserung des Abreinigungsverhaltens. Die Applikation der FC Phobierungsmitteln auf die Abstandsgewirke erfolgt mittels klassischen Imprägnierverfahren mit herkömmlichen Maschinen und Apparaten der Textilveredlung.

In einer Ausführungsform der Erfindung wird eine Polymerbeschichtung basierend auf Hart- und Weichsegmente sogenannte Polyurethanpolymer zur Stabilisierung und Verfestigung der Mattenstruktur eingesetzt. Die Polyurethane weisen eine gute Filmbildung- und Adhäsionseigenschaften zu den Polymeren und eine gute Wasch- und Chemischreinigungsbeständigkeit auf.

Das Aufbringen der Polyurethanpolymere kann auf der Ober- und der Unterseite der Abstandsgewirkestrukturen erfolgen. Die Beschichtungsapplikation erfolgt durch Streich- und Walzenantragsverfahren.

Die diffusionsoffene, reibungsarme und trockene Deckschicht der 3D-Abstandstextilie ermöglicht es, mit synthetischen Liegematten ausgerüstete Liegeboxen ohne die zusätzliche Verwendung von organischem oder mineralischem Einstreumaterial zu betreiben.

Weiterhin weisen die 3D-Abstandstextilien zudem bei hoher mechanischer Belastbarkeit eine geringere Stauchhärte auf, als Liegematten aus Gummi, so dass sowohl die obere Schicht des Bodenbelags an sich als auch die obere Schicht des Bodenbelags in Kombination mit der unteren Schicht des Bodenbelags aus verschiedenen herkömmlich eingesetzten Polstermaterialien weniger hart ist, als die z.Z. auf dem Markt verfügbaren Liegematten.

In einer Ausführungsform der Erfindung weist der erfindungsgemäße Bodenbelag im Bereich der oberen Matte mehrere Lagen der 3D-Abstandstextilien auf. Dies ist insbesondere vorteilhaft, wenn einzelne Lagen der 3D-Astandstextilien unterschiedliche Funktionen wahrnehmen sollen.

So ist es denkbar, dass die verschiedenen Lagen der 3D-Abstandstextilie unterschiedliche Beschichtungen aufweisen sollen, um in den einzelnen Bereichen des erfindungsgemäßen Bodenbelags die gewünschten Eigenschaften einzustellen. Dabei können neben Erhöhung des Komforts der Tiere auch Verbesserungen im Bereich der Verschmutzungs- und Abriebsresistenz und des Trockenverhaltens der einzelnen Lagen der 3D-Abstandstextilien eingestellt werden.

In einer Ausführungsform ist der Bodenbelag aus mehreren Lagen der 3D-Abstandstextilien, welche auf einer perforierten Untermatte aufgebracht sind, ausgebildet. Die Untermatte kann dabei beispielsweise eine übliche Gummimatte sein, welche hinreichende Perforationen aufweist. Durch die Perforationen kann die Flüssigkeit hindurchtreten, aber auch eine Unterlüftung des Bodenbelags erfolgen. Die Untermatte dient dabei ausschließlich der Optimierung der Härte des Bodenbelags und erlaubt eine Reduzierung der zu verwendenden Einzellagen.

Der erfindungsgemäße Bodenbelag für Liegebereiche mit diffusionsoffener und reibungsarmer Deckschicht aus 3D- Abstandstextilien bietet dem Anwender im Vergleich zu den derzeit im Einsatz befindlichen synthetischen Liegematten die Vorteile der Einsparung von Einstreumaterial und Arbeitszeit, der Verringerung der Häufigkeit des Auftretens von Integumentschäden und dadurch bedingter Senkung der Tiergesundheitskosten (Behandlung, Medikamente, Leistungseinbußen, Zwangsabgänge) sowie eine Erhöhung des Liegekomforts und dadurch mögliche Leistungssteigerungen.

Ein weiterer Aspekt der Erfindung betrifft einen Liegebereich zur Aufstallung von Milchrindern in Milchrinderställen. Der erfindungsgemäße Liegebereich umfasst hierbei den erfindungsgemäßen Bodenbelag und eine Auflagefläche zur Auflage des Bodenbelags, wobei die Auflagefläche zumindest im Bereich des erfindungsgemäßen Bodenbelags eine offene Struktur zur Ableitung von Flüssigkeiten und zur Unterlüftung des Bodenbelags aufweist. Die Auflagefläche kann dabei beispielsweise als Spaltenboden ausgebildet sein. Durch die erfindungsgemäße offene Struktur des Bodenbelags ist vorteilhaft eine Unterlüftung desselben gewährleistet. Dadurch wird eine Klimatisierung für die Tiere durch den erfindungsgemäßen Bodenbelag erreicht, welche vorzugsweise bei Liegen der Tiere erfolgt. Dies steigert den Tierkomfort erheblich und ist dabei wesentlich effizienter als herkömmliche Stallbelüftungsanlagen, welche eine Klimatisierung durch Verwirbelung der Luft oberhalb des Liegebereichs erzeugen. Durch die Verwendung des erfindungsgemäßen Bodenbelags, welcher einstreufrei genutzt werden kann, ist zum einen die Ableitung von Feuchtigkeit und zum anderen eine Unterlüftung gewährleistet.

Durch den erfindungsgemäßen Liegebereich ist eine Klimatisierung der Tiere beim Liegen auf dem erfindungsgemäßen Bodenbelag gegeben, sodass die Tiere aktiv eine Regulierung ihrer Körpertemperatur selbständig vornehmen können. Dadurch können aufwändige Belüftungskonzepte vermieden werden, was jedoch nicht bedeutet, dass gänzlich auf eine Frischluftzuführung verzichtet werden kann. Es wurde festgestellt, dass aufgrund des Temperaturunterschieds im Viehstall eine Ventilationswirkung durch den Temperaturausgleich innerhalb des Stalls gegeben ist, sodass zumeist auf eine zusätzliche Unterlüftung verzichtet werden kann.

Gegenstand der Erfindung ist auch die Verwendung einer erfindungsgemäßen Vorrichtung zur Reinigung von Liegebereichen.

Die Erfindung wirkt sich nachweislich positiv aus auf
- das Liegeverhalten und die Liegedauer der Tiere
- die Sauberkeit der Tiere
- die hygienischen Verhältnisse auf dem Liegebereich
- die Vermeidung bzw. Verringerung von Hitzestress.

Die Erfindung stellt daher ein Verfahren zur Bewirtschaftung eines Liegebereichs in für Nutztierställe, Rinderställe, bereit, bestehend aus
- einem wobei der Bodenbelag, der zwei- oder mehrschichtig ausgeführt ist und bei dem die obere Schicht aus Einzellagen ausgebildet ist, welche aus einer 3D-Abstandstextilien aus Kunststofffilamenten ausgebildet ist sind, wobei die Einzellage grobporige Öffnungen aufweist und dadurch für Feuchtigkeit offen, aber für Feststoffpartikel geschlossen ausgestaltet ist,
- einen Liegebereich in Nutztierställen umfassend den erfindungsgemäßen Bodenbelag, sowie ein Verfahren zur Klimatisierung des Liegebereichs und
- eine Vorrichtung zur Reinigung des Liegebereichs.

In einer Ausgestaltung besteht die erfindungsgemäße 3D-Abtandtextilie dabei aus zumindest einer Ober- und Unterschicht. Die 3D-Abstandstextilien besitzen eine offene Struktur, die einen Luft- und Feuchteaustausch zulässt und dadurch die Bildung von Feuchtigkeitsfilmen an der aufliegenden Haut der Tiere verhindert. Durch die vertikale Beweglichkeit der textilen Strukturen wird ein Aufscheuern aufliegender Körperpartien verhindert, wodurch Integumentschäden, wie sie bei herkömmlichen Liegematten mit Gummioberfläche vor allem an den Gelenken der Tiere auftreten, vermieden werden.

Es ist auch denkbar, dass Verfahren und den Liegebereich sowie den erfindungsgemäßen Bodenbelag für andere Nutztiere zu verwenden. Unter einem Nutztier wird im Sinne der vorliegenden Erfindung ein domestiziertes landwirtschaftlich genutztes Nutztier verstanden, wobei zwischen Großvieh (Schweine, Pferde) sowie Kleinvieh (Geflügel und Kaninchen) unterschieden wird.

### AUSFÜHRUNGSBEISPIELE

Die Erfindung soll nachfolgend anhand einiger Abbildung und von Ausführungsbeispielen eingehender erläutert werden. Die Ausführungsbeispiele sollen dabei die Erfindung beschreiben ohne diese zu beschränken.

Es zeigen die
Fig. 1 eine schematische Darstellung des erfindungsgemäßen Verfahrens zur Aufstallung, in
Fig. 2 eine schematische Darstellung einer erfindungsgemäßen oberen Einzellage des Bodenbelags, in
Fig. 3 eine schematische Querschnittsdarstellung einer Einzellage des erfindungsgemäßen Bodenbelags, in
Fig. 4 ein Diagramm zum Druckbelastungstest, in
Fig. 5 ein Diagramm zum Liegeverhalten von Milchkühen, in
Fig. 6 ein Diagramm zur Auswirkung des Bodenbelags auf die Gelenkgesundheit, in
Fig. 7 ein Diagramm zum Vergleich der Schmutzbelastung, in
Fig. 8 ein Vergleich der mittleren Keimzahl auf den Bodenbelägen und in
Fig. 9 ein Diagramm zum Effekt der Unterlüftung auf die Klimatisierung bei hohen Temperaturen.

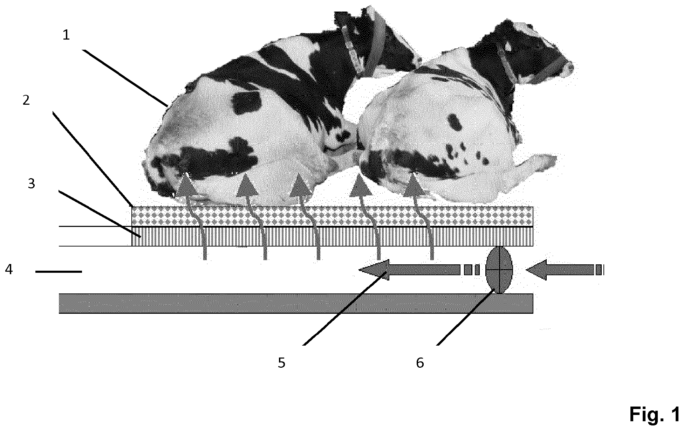

In einem ersten Ausführungsbeispiel ist in der Fig. 1 schematisch das erfindungsgemäße Verfahren zur Aufstallung von Milchrindern 1 in Milchrinderställen dargestellt. Dabei wird ein einstreufreier Liegebereichs mit einem Bodenbelag 2 bereitgestellt, wobei der Bodenbelag 2 zwei- oder mehrlagig ausgeführt ist, wobei zumindest die obere Einzellage aus einer 3D-Abstandstextilie aus Kunststoff, bevorzugt aus einem 3D-Gewirke ausgebildet ist und die Einzellage Öffnungen in Form von Poren oder Maschen aufweist, die einen Poren- bzw. Netzmaschendurchmesser von 0,2 bis 0,8 cm aufweisen. Der Bodenbelag 2 liegt dabei auf einer Auflagefläche des Liegebereichs auf, wobei die Auflagefläche 3 beispielsweise als Spaltenboden ausgebildet ist. Dabei erfolgt eine Kontaktierung des Liegebereichs durch die Milchrinder 1, bevorzugt durch Liegen der Milchrinder 1 auf dem Liegebereich, wobei die während der Kontaktierung anfallende Flüssigkeiten durch die Poren oder Maschen des Bodenbelags 2 des Liegebereichs hindurch abgeleitet werden, wobei keine Flüssigkeitsansammlungen auf dem Liegebereich verbleiben, sodass auf den Einsatz von Einstreu verzichtet wird. Zudem erfolgt eine Unterlüftung des Bodenbelags zur Klimatisierung der Milchrinder 1 beim Liegen. Die Unterlüftung erfolgt dabei durch die Auflagefläche 3 und den Bodenbelag 2 hindurch, wobei die Luft beispielsweise über einen Unterflurkanal 4 zum Liegebereich zugeführt wird. Die zugeführte Luftströmung wird bevorzugt mittels einer Vorrichtung zur Belüftung 6, beispielsweise einem Axiallüfter erzeugt.

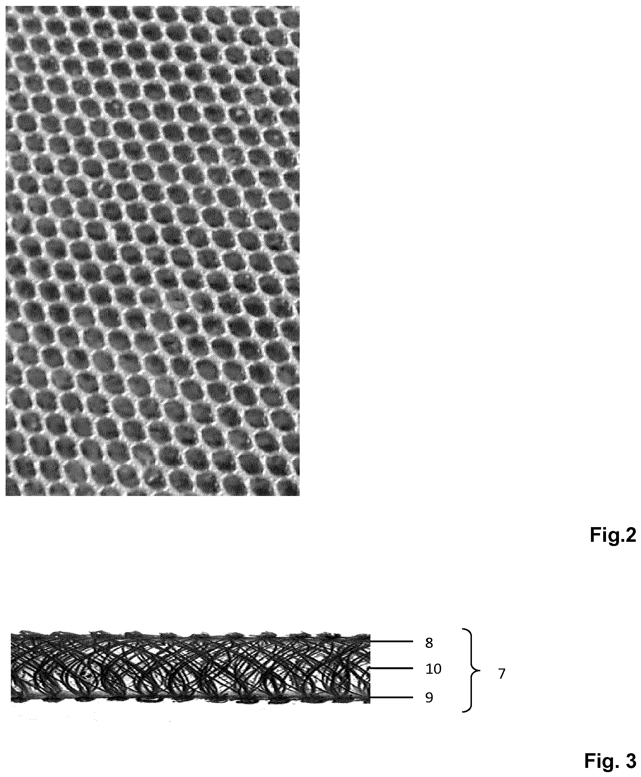

In einem weiteren Ausführungsbeispiel ist in der Fig. 2 eine oberste Einzellage des erfindungsgemäßen Bodenbelags 2 dargestellt. Der Bodenbelag 2 ist dabei zwei- oder mehrschichtig ausgeführt. Beispielsweise ist dieser in der aus 8 Einzellagen ausgebildet. Zumindest die oberste Einzellage weist eine netz- oder gitterförmige offene Struktur auf und sind beispielsweise als gitterartig/netzartig offene 3D-Abstandstextilie (3D-Gewirke) ausgebildet (Fig. 2). Die 3D-Abstandstextilie weist einen Poren- bzw. Netzmaschendurchmesser von ca. 0,5 cm auf. Als Fadenmaterial für die 3D-Abstandstextilie werden Polyfilamente aus Polyester mit einem Filamentdurchmesser bis zu 0,2 mm verwendet.

In der Fig. 3 ist eine schematische Querschnittsdarstellung einer Einzellage 7 des erfindungsgemäßen Bodenbelags 2 dargestellt. Die Einzellage 7 ist dabei aus einer 3D-Absatndstextilie ausgebildet.

Die 3D-Abstandstextilie selbst ist aus zwei Lagen ausgebildet, wobei eine Oberschicht 8 sowie eine Unterschicht 9 vorgesehen sind. Die Oberschicht 8 und die Unterschicht 9 sind aus einem Gewirke aus hochfesten Fäden aus Polyester gefertigt. Zwischen der Ober- und der Unterschicht 8, 9 sind Abstandsfäden, vorzugsweise aus Polyesterfäden 10 angeordnet. Die Ober - und Unterschicht 8, 9 der 3D-Abstandstextilie 7 sind dabei aus Multifilament-Fäden ausgebildet, wodurch die notwendige Druckstabilität erlangt wird. Diese Multifilament-Fäden sind bindungstechnisch, d. h. wirktechnisch fest in der Ober- und Unterschicht 8, 9 schräg zueinander (verkreuzt) angeordnet.

In einem weiteren Ausführungsbeispiel sind auf der Oberseite 8 der 3D-Abstandstextilie 7 Strukturmodifizierungen vorgesehen, welche eine Verbesserung des Reinigungsverhaltens ermöglichen.

In einem weiteren Ausführungsbeispiel weisen die Filamentfäden der 3D-Abstandstextilie 7 eine Ausrüstung (Beschichtung) auf. Diese Ausrüstung ist besonders vorteilhaft um ein Eindringen von Schmutz in die Zwischenräume beispielsweise von Multifilamentfäden zu vermeiden. Des Weiteren können Ausrüstungen auch vorgesehen sein um die die strukturelle Stabilität zu verbessern oder antibakterielle Wirkungen zu erzielen. Hierzu eignen sich insbesondere Silikon- oder Polyurethan (PU) Beschichtungen.

In einem bevorzugten Ausführungsbeispiel erfolgt zunächst eine Basisbeschichtung des Fadenmaterials der 3D-Abstandstextile 7 mit einer Polyurethanbeschichtung durch Thermofixierung der Materialstruktur und der nachfolgenden Beschichtung. Zur Beschichtung wird eine Polyurethanmischung mit den nachfolgenden Komponenten verwendet:
- Ruco-coat PU 8511 (Rudolf Chemie) = 10% (Gewicht),
- Ruco-coat PU 3511, (Rudolf Chemie) = 10% (Gewicht),
- Wasser = 80% (Gewicht)

Das Imprägnierverfahren erfolgt bei einer Nassaufnahme von ca. 40% und anschließendem Trocknen bei 130°C, 2 min Kondensieren bei Trockenauflage von ca. 3%.

Auf die Polyurethanbeschichtung wird nachfolgend eine Deckbeschichtung mit einem Fluorcarbon-Material (FC) aufgebracht. Die Deckbeschichtung umfasst dabei die nachfolgenden Komponeneten:
- 100,0 g/l Rucostar EEE6 (Rudolf Chemie),
- 50,0 g/l Eternitex® 069/005 (Whitford),
- 0,6 g/l Essigsäure (100%ig),
bei einem pH-Wert von 4,5 - 5.

Das Imprägnierverfahren erfolgt bei einer Nassaufnahme von ca. 60%.

In einem weiteren nicht näher dargestellten Ausführungsbeispiel umfasst der erfindungsgemäße Bodenbelag 2 insgesamt 8 Einzellagen 7, wobei die obere und untere Einzellage 7 als Aussenlagen mit Spanngurten verstärkt und in Etuiform vernäht sind. Dabei entspricht die Höhe des Etuis an Kotkantenseite der Höhe der 6 Einzelinnenlagen 7.

In einem weiteren nicht näher dargestellten Ausführungsbeispiel erfolgt die Befestigung des erfindungsgemäßen Bodenbelags 2 an der Kopfseite mittels einer aufliegender Leiste oder eines Bugbalkens, wobei diese festgeklemmt und am Untergrund verschraubt werden. An der Kotkantenseite ist an der Aussenlage Kederleiste angeordnet, welche in die am Betonsockel des Liegebereichs befestigte Kederschiene eingeschoben wird.

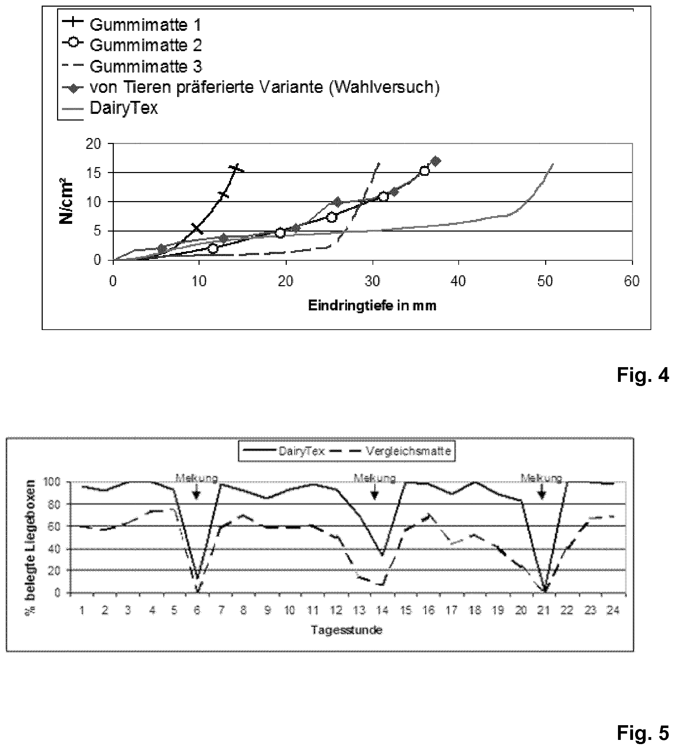

In einem weiteren Ausführungsbeispiel wird die Annahme des erfindungsgemäßen Bodenbelags 2 (DairyTex) durch Milchkühe beschrieben. Die Fig. 4 zeigt einen Druckbelastungstest nach Hoffmann, et al. (Hoffmann, G., Fazeli, M. (2010): Interne Prüfvorschrift für textile Liegematten. In: Abschlussbericht AIF-Kooperationsprojekt "Entwicklung einer textilen Liegematte für Milchkühe (DairyTex)", S. 42), in Anlehnung an DIN EN ISO 3386: Dabei drückt ein Prüfstempel mit definierter Kraft auf den Bodenbelag 2 (DairyTex). Es wird gemessen, wie weit sich der Bodenbelag 2 zusammendrücken lässt. Dies entspricht der Eindringftiefe. Bei Gummimatte 1 bis 3 handelt es sich um kommerzielle Produkte von führenden Herstellern, die den aktuellen Stand der Technik repräsentieren. Die von den Tieren im Wahlversuch präferierte Variante weist bereits bei geringer Krafteinwirkung eine mittlere Verformung auf. Der erfindungsgemäße Bodenbelag 2 (DairyTex) bildet hier die Präferenzkurve fast exakt nach. Bei Einwirkung höherer Kräfte gibt der erfindungsgemäße Bodenbelag 2 (DairyTex) noch wesentlich länger nach, als die präferierte Variante dazu in der Lage war. Das ist als positiv zu bewerten, da dadurch ein schmerzhaftes Aufschlagen der Gelenke auf die Matte beim Liegen der Kühe sicher ausgeschlossen werden kann. Mit dem erfindungsgemäßen Bodenbelag 2 (DairyTex) kann der Liegebereich so gepolstert werden, wie es den Wünschen der Tiere entspricht.

In einem weiteren Ausführungsbeispiel ist in Fig. 5 ein Vergleich des Liegeverhaltens von Milchkühen wiedergegeben. Zur Ermittlung des Liegeverhaltens wurde ein Wahlversuch durchgeführt bei dem 30 Liegeboxen der Wandreihe innerhalb eines Haltungsabteiles je zur Hälfte mit dem erfindungsgemäßen Bodenbelag 2 (DairyTex) oder einer sehr guten, mit reichlich Strohmehl eingestreuten Gummimatte (Wingflex, Firma Kraiburg) ausgestattet waren. Die Zählung der belegten Boxen erfolgte über 6 Tage zu jeder vollen Stunde, die Ergebnisse wurden gemittelt. Bei 18 von 24 Tagesstunden ist die Differenz zwischen den Matten signifikant (Standardfehler nach Ferguson 1959).

Hervorzuheben ist die sehr große Akzeptanz des erfindungsgemäßen Bodenbelags 2 (DairyTex) durch die Tiere, die in jedem Praxisversuch zu beobachten war und anhand des bei Langzeitbeobachtungen ermittelten Wahl- und Liegeverhaltens belegt werden kann (Fig. 5). Ursache für die hohe Akzeptanz ist jedoch nicht nur die gute Liegebereichspolsterung, wie Versuche mit sehr dünnen, wenig polsternden Entwicklungsstufen zeigten. Trotz der fehlenden Polsterung bevorzugten die Tiere eindeutig das erfindungsgemäße textile Material, wahrscheinlich aufgrund seiner guten haptischen Eigenschaften (nicht scheuernd, trocken, atmungsaktiv).

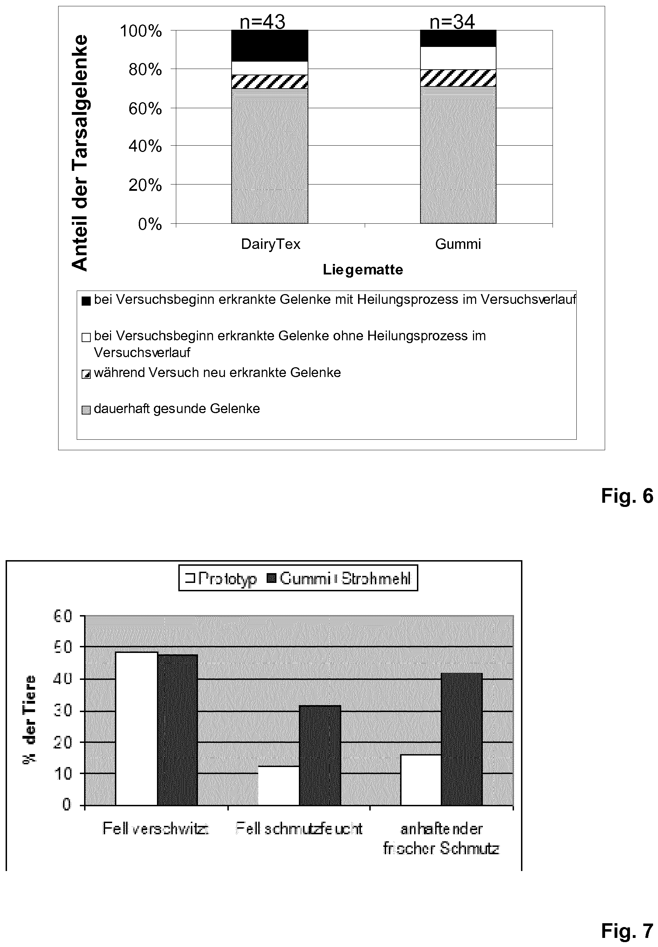

In einem weiteren Ausführungsbeispiel ist in Fig. 6 die positive Auswirkung des erfindungsgemäßen Bodenbelags 2 (DairyTex) auf die Gelenksgesundheit dargestellt. Die Versuchsdurchführung erfolgte innerhalb einer Herde von Milchkühen, um gleiche Ausgangsvoraussetzungen für Versuchs- und Kontrollgruppe zu gewährleisten. Die Versuchstiergruppe wurde auf dem erfindungsgemäßen Bodenbelag 2 (DairyTex), die Kontrolltiergruppe auf einer herkömmlichen Gummimatte mit Einstreu gehalten. Als "gesunde" Gelenke werden Gelenke ohne Schädigung und Gelenke mit für Tiere auf Gummimatten typischen Liegeschwielen ohne offene Verletzungen oder entzündliche Prozesse bewertet. Als "kranke" Gelenke werden dagegen Gelenke mit Schwellungen und/oder offenen entzündlichen Prozessen bezeichnet. Die Tiere hielten sich zwischen 3 und 11 Wochen auf dem jeweiligen Bodenbelag 2 auf, was für die Abheilung von chronischen Integumentschäden an den Tarsalgelenken als kurzer Zeitraum zu werten ist. Der positive Effekt der nichtscheuernden Oberfläche hinsichtlich der Gelenksgesundheit konnte dabei bereits in ersten Versuchen belegt werden (Fig. 6): Auf dem erfindungsgemäßen Bodenbelag 2 (DairyTex) konnte eine leicht niedrigere Neuerkrankungsrate und eine deutlich höhere Abheilungsrate erkrankter Gelenke verzeichnet werden, als auf der Gummimatte.

In einem weiteren Ausführungsbeispiel ist in Fig. 7 die positive Auswirkung der trockenen Oberfläche auf die Tiersauberkeit und den Hygienestatus des Liegebereichs dargestellt. Dabei wurden Liegeboxen eines Haltungsabteiles teilweise mit dem erfindungsgemäßen Bodenbelag 2 (DairyTex) und teilweise mit Gummimatten (Wingflex, Kraiburg) und Strohmehleinstreu ausgestattet. Die Bonitur der 32 Tiere erfolgt unmittelbar nach dem Aufstehvorgang, wobei das Fell am Schenkel bonitiert wurde. Der erfindungsgemäße Bodenbelag 2 (DairyTex) aus textilen Abstandsgewirken weist eine luft- und feuchtedurchlässige Struktur auf, die aus diesem Grund sehr schnell abtrocknet. Ebenso bewirkt die Struktur des Bodenbelags 2 (DairyTex), dass bei der Erfindung gemäßen Pflege Schmutz nicht anhaftet. In der Folge davon sind die Tiere auf dem erfindungsgemäßen Bodenbelag 2 (DairyTex) sauberer und weniger verschwitzt, als auf Gummimatten mit Einstreu (Fig. 7).

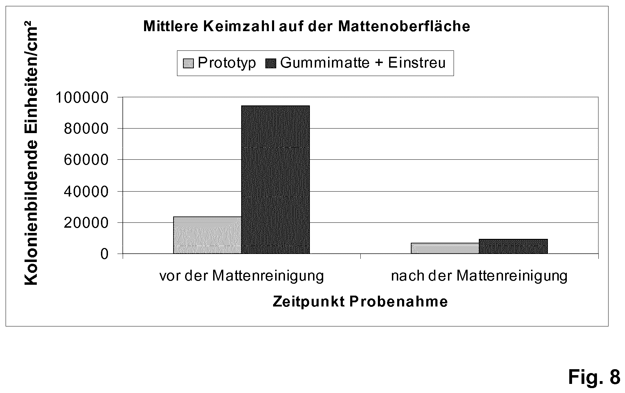

In einem weiteren Ausführungsbeispiel ist in Fig. 8 ein Vergleich der mittleren Keimzahl auf den Bodenbelägen 2 dargestellt. Die Probennahmemethode erfolgt nach Liebers und Bartschies (Liebers und Bartschies (2010): Untersuchungen zur hygienischen Beurteilung von Hochliegeboxen. Diplomarbeit, Hochschule für Technik und Wirtschaft Dresden (2010). Als Datengrundlage dienten 26 Proben auf je einem Liegebereich mit dem erfindungsgemäßen Bodenbelag 2 (Prototyp von DairyTex) und 23 Proben auf je einem Liegebereich mit eingestreuter Gummimatte. Die Oberfläche des erfindungsgemäßen Bodenbelags 2 (Prototyp von DairyTex) ist dabei geringer mit Keimen kontaminiert, als die Gummimatte (Fig. 8). Neben der schnellen Abtrocknung ist dafür vor allem die durch die grobporige Netzstruktur des erfindungsgemäßen Bodenbelags 2 bedingte geringere effektive Oberfläche verantwortlich.

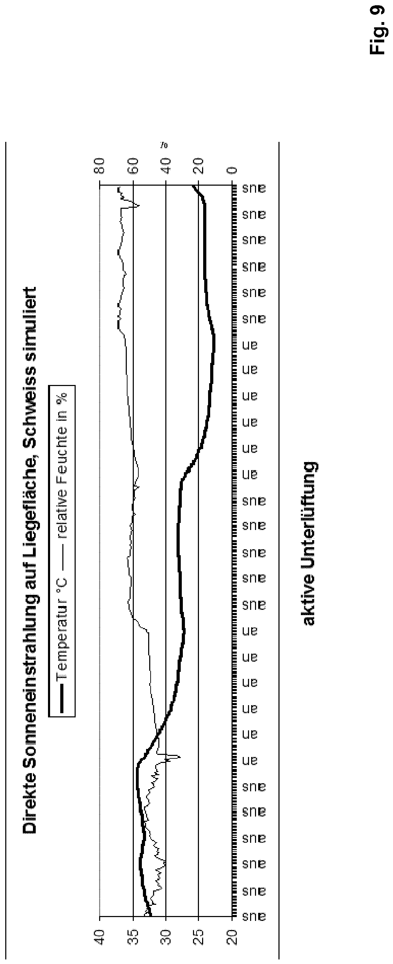

In einem weiteren Ausführungsbeispiel ist in Fig. 9 der Effekt der Unterlüftung auf die Abkühlung der Tiere bei hohen Umgebungstemperaturen dargestellt. Dazu wurde ein Klimamessgerät (Voltcraft DL 120 TH) auf dem Liegebereich mit dem erfindungsgemäßen Bodenbelag 2 (DairyTex) positioniert und die Oberfläche der Sensorenkappe zur Simulation von Schweiß leicht angefeuchtet. Die Messung erfolgte bei einer Lufttemperatur von 30°C im Schatten, wobei die Lüftung wechselweise an- und ausgeschalten wurde. Es konnte belegt werden, dass mittels der Unterlüftung der Liegeplätze ein erheblicher Kühleffekt am Tier erzielt wird. Bereits bei sehr geringen Strömungsgeschwindigkeiten kann unter Ausnutzung der Verdunstungskälte (Schweiß) die durch den erfindungsgemäßen Bodenbelag hindurch am Tierkörper entlangströmende Luft einen Kühleffekt von bis zu 8°C an der Hautoberfläche erzielen (Fig. 9).

### Bezugszeichen

- 1: Milchrinder
- 2: Bodenbelag
- 3: Auflagefläche
- 4: Unterflurkanal
- 5: Luftströmung
- 6: Unterschicht
- 7: 3D-Abstandstextilie
- 8: Oberschicht
- 9: Unterschicht
- 10: Abstandsfäden

## Patentansprüche

1. Verfahren zur Aufstallung von Milchrindern (1) in Milchrinderställen umfassend:
- Bereitstellen eines einstreufreien Liegebereichs mit einem Bodenbelag (2), wobei der Bodenbelag (2) zwei- oder mehrlagig ausgeführt ist, wobei zumindest die obere Einzellage aus einer 3D-Abstandstextilie (7) aus Kunststoff, bevorzugt aus einem 3D-Gewirke ausgebildet ist und die Einzellage Öffnungen in Form von Poren oder Maschen aufweist, die einen Poren- bzw. Netzmaschendurchmesser von 0,2 bis 0,8 cm aufweisen,
- Kontaktieren des Liegebereichs durch Milchrinder (1), bevorzugt Liegen der Milchrinder (1) auf dem Liegebereich, wobei die während der Kontaktierung anfallende Flüssigkeiten durch die Poren oder Maschen des Bodenbelags (2) des Liegebereichs hindurch abgeleitet werden, wobei keine Flüssigkeitsansammlungen auf dem Liegebereich verbleiben, sodass auf den Einsatz von Einstreu verzichtet wird und
- eine Unterlüftung des Bodenbelags zur Klimatisierung der Milchrinder beim Liegen erfolgt.

2. Verfahren nach Anspruch 1, **dadurch gekennzeichnet, dass** die Unterlüftung durch den erfindungsgemäßen Bodenbelag (2) hindurch mittels einer Vorrichtung zur Belüftung (6) erfolgt.

3. Verfahren nach einem der Ansprüche 1 oder 2 weiterhin umfassend die Reinigung des erfindungsgemäßen Bodenbelags (2), wobei die Reinigung bevorzugt durch Unterdruck erfolgt.

4. Verfahren nach Anspruch 3, **dadurch gekennzeichnet, dass** die Reinigung derart erfolgt, dass die Vorrichtung zur Reinigung eine festgelegte Fläche automatisch reinigt.

5. Bodenbelag (2) für Liegebereiche zur Aufstallung von Milchrindern (1) in Milchrinderställen, welcher zwei- oder mehrlagig ausgeführt ist, wobei zumindest die obere Einzellage aus einer 3D-Abstandstextilie (7) aus Kunststoff, bevorzugt aus einem 3D-Gewirke ausgebildet ist und die Einzellage Öffnungen in Form von Poren oder Maschen aufweist, die einen Poren- bzw. Netzmaschendurchmesser von 0,2 bis 0,8 cm aufweisen.

6. Bodenbelag (2) nach Anspruch 5, **dadurch gekennzeichnet, dass** der Bodenbelag (2) 2 bis 12, bevorzugt 5 bis 10, besonders bevorzugt 8 Einzellagen (7) aufweist.

7. Bodenbelag (2) nach einem der Ansprüche 5 und 6, **dadurch gekennzeichnet, dass** die Filamentgarne der 3D-Abstandstextilien (7) eine Ausrüstung aufweisen, wobei die Ausrüstung zumindest eine wasserabweisende Komponente, bevorzugt eine Fluorcarbonverbindung umfasst.

8. Bodenbelag (2) nach einem der Ansprüche 5 bis 7, **dadurch gekennzeichnet, dass** die Filamentgarne der 3D-Abstandstextilien (7) eine Ausrüstung aufweisen, wobei die Ausrüstung verstärkende Komponente, bevorzugt Polyurethan oder Silikon umfasst.

9. Bodenbelag (2) nach einem der Ansprüche 5 bis 8, **dadurch gekennzeichnet, dass** das Fadenmaterial der 3D-Abstandstextilie (7) eine bakterizid wirkende Ausrüstung umfasst.

10. Liegebereich zur Aufstallung von Milchrindern (1) in Milchrinderställen umfassend eine Bodenbelag (2) nach einem der Ansprüche 5 bis 9 und eine Auflagefläche (3) zur Auflage des Bodenbelags (2), wobei die Auflagefläche (3) zumindest im Bereich des Bodenbelags (2) eine offene Struktur zur Ableitung von Flüssigkeiten und zur Unterlüftung des Bodenbelags (2) aufweist.

11. Verwendung eines Verfahrens zur Aufstallung von Milchrindern (1) nach einem der Ansprüche 1 bis 4 und eines Bodenbelags (2) für Liegebereiche zur Aufstallung von Milchkühen nach einem der Ansprüche 5 bis 9 sowie eines Liegebereichs nach Anspruch 10.

## Claims

1. A method for keeping dairy cows (1) in dairy cow stalls comprising:
- Provision of a resting area without bedding having a floor covering (2), wherein the floor covering (2) is of two-layer or multi-layer design, wherein at least the upper single layer is made of a 3D spacer fabric (7) made of plastic, preferably a 3D woven fabric, and the single layer has openings in the form of pores or meshes which have a pore or net mesh diameter of 0.2 to 0.8 cm,
- contact between the resting area and dairy cows (1), preferably with the dairy cows (1) lying on the resting area, wherein any liquids produced while contact is made are drained off through the pores or meshes of the floor covering (2) in the resting area, wherein no accumulated liquid remains in the resting area, which means that the use of bedding can be dispensed with and
- there is under-ventilation of the floor covering to provide an air flow around the dairy cows while they are resting.

2. The method according to claim 1, **characterized in that** the under-ventilation takes place through the floor covering (2) according to the invention by means of a device for ventilation (6).

3. The method according to one of claims 1 or 2, furthermore comprising the cleaning of the floor covering (2) according to the invention, wherein cleaning preferably takes place through negative pressure.

4. The method according to claim 3, **characterized in that** the cleaning takes place in such a manner that the device for cleaning automatically cleans a defined surface area.

5. A floor covering (2) for resting areas for keeping dairy cows (1) in dairy cow stalls which is of two-layer or multi-layer design, wherein at least the upper single layer is made of a 3D spacer fabric (7) made of plastic, preferably a 3D woven fabric, and the single layer exhibits openings in the form of pores or meshes which have a pore or net mesh diameter of 0.2 to 0.8 cm.

6. The floor covering (2) according to claim 5, **characterized in that** the floor covering (2) has 2 to 12, preferably 5 to 10, particularly preferably 8, single layers (7).

7. The floor covering (2) according to one of claims 5 and 6, **characterized in that** the filament yarns of the 3D spacer fabrics (7) have a finish, wherein the finish comprises at least one water-repellent component, preferably a fluorocarbon compound.

8. The floor covering (2) according to one of claims 5 to 7, **characterized in that** the filament yarns of the 3D spacer textiles (7) have a finish, wherein the finish comprises a reinforcing components, preferably polyurethane or silicon.

9. The floor covering (2) according to one of claims 5 to 8, **characterized in that** the thread material of the 3D spacer textiles (7) comprises a finish with a bactericidal action.

10. A resting area for keeping dairy cows (1) in dairy cow stalls comprising a floor covering (2) according to one of claims 5 to 9 and a bearing surface for supporting the floor covering (2), wherein the supporting surface (3) has an open structure at least in the region of the floor covering (2) for draining liquids away and for under-ventilating the floor covering (2).

11. Use of a method for keeping dairy cows (1) in stalls according to one of claims 1 to 4 and a floor covering (2) for resting areas for keeping dairy cows in stalls according to one of claims 5 to 9 and also a resting area according to claim 10.

## Revendications

1. Procédé de mise en stabulation de bovins laitiers (1) dans des étables pour bovins laitiers comprenant .
- la mise à disposition d'une zone de couchage sans litière, avec un revêtement de sol (2), le revêtement de sol (2) étant réalisé en version bicouches ou en multicouches, au moins la couche individuelle supérieure étant conçue en un textile d'écartement en 3D (7) en matière plastique, de préférence en un maillage et la couche individuelle comportant des orifices sous la forme de pores ou de mailles, qui présentent un diamètre des pores ou des mailles de treillis de 0,2 à 0,8 cm,
- de la mise en contact de la zone de couchage avec des bovins laitiers (1), de préférence du couchage des bovins laitiers (1) sur la zone de couchage, les liquides produits lors de la mise en contact étant évacués à travers les pores ou les mailles du revêtement de sol (2) de la zone de couchage, aucune accumulation de liquide ne subsistant sur la zone de couchage, de sorte qu'il peut être renoncé à l'utilisation d'une litière et
- une aération par le dessous du revêtement de sol ayant lieu, pour climatiser les bovins laitiers lorsqu'ils sont couchés.

2. Procédé selon la revendication 1, **caractérisé en ce que** l'aération par le dessous s'effectue à travers le revêtement de sol (2) selon l'invention, au moyen d'un dispositif de ventilation (6).

3. Procédé selon l'une quelconque des revendications 1 ou 2, comprenant par ailleurs le nettoyage du revêtement de sol (2) selon l'invention, le nettoyage étant effectué de préférence par dépression.

4. Procédé selon la revendication 3, **caractérisé en ce que** le nettoyage s'effectue de telle sorte que le dispositif de nettoyage nettoie automatiquement une surface déterminée.

5. Revêtement de sol (2) pour des zones de couchage pour la mise en stabulation de bovins laitiers (1) dans des étables pour bovins laitiers, lequel est conçu en version bicouches ou multicouches, au moins la couche individuelle supérieure étant conçue en un textile d'écartement en 3D (7) en matière plastique, de préférence en un maillage et la couche individuelle comportant des orifices sous la forme de pores ou de mailles, qui présentent un diamètre des pores ou des mailles de treillis de 0,2 à 0,8 cm.

6. Revêtement de sol (2) selon la revendication 5, **caractérisé en ce que** le revêtement de sol (2) comporte de 2 à 12, de préférence de 5 à 10, de manière particulièrement préférentielle 8 couches individuelles (7).

7. Revêtement de sol (2) selon l'une quelconque des revendications 5 et 6, **caractérisé en ce que** les fils de filament des textiles d'écartement 3D (7) comportent un apprêt, l'apprêt comprenant un composant hydrophobe, de préférence un composé de fluorocarbure.

8. Revêtement de sol (2) selon l'une quelconque des revendications 5 à 7, **caractérisé en ce que** les fils de filament des textiles d'écartement 3D (7) comportent un apprêt, l'apprêt comprenant des composants renforcés, de préférence du polyuréthane ou du silicone.

9. Revêtement de sol (2) selon l'une quelconque des revendications 5 à 8, **caractérisé en ce que** le fil du textile d'écartement 3D (7) comprend un apprêt à effet bactéricide.

10. Zone de couchage pour la mise en stabulation de bovins laitiers (1) dans des étables pour bovins laitiers, comprenant un revêtement de sol (2) selon l'une quelconque des revendications 5 à 9 et une surface de pose (3) pour poser le revêtement de sol (2), au moins dans la zone du revêtement de sol (2), la surface de pose comportant une structure ouverte pour évacuer des liquides et pour aérer par le dessous le revêtement de sol (2).

11. Utilisation d'un procédé de mise en stabulation de bovins laitiers (1) selon l'une quelconque des revendications 1 à 4 et d'un revêtement de sol (2) pour des zones de couchage pour la mise en stabulation de vaches laitières selon l'une quelconque des revendications 5 à 9, ainsi que d'une zone de couchage selon la revendication 10.
